# EUROPÄISCHE PATENTANMELDUNG

(11) **EP 0 663 356 A1**
(43) Veröffentlichungstag der Anmeldung: **19.07.1995**
(21) Anmeldenummer: 95100421.7
(22) Anmeldetag: 13.01.1995
(51) Int. Cl.: B65G 47/88, B65G 47/32

(54) **Vorrichtung zur Vereinzeln von Packungen**

(30) Priorität: 15.01.1994 DE 4401060
(71) Anmelder: Christian Senning Verpackungsautomaten GmbH & Co., D-28239 Bremen (DE)
(72) Erfinder: Wach, Jürgen, D-28719 Bremen (DE)
(74) Vertreter: Eisenführ, Speiser & Partner

(57) **Zusammenfassung**

Die Erfindung betrifft eine Vorrichtung zum Vereinzeln von auf einem Bandförderer (2) oder dergleichen in einer kontinuierlichen Packungsbahn ohne Zwischenräume ankommenden, quaderförmigen Packungen (1) zwecks Weitertransport in definierten Abständen der einzelnen Packungen voneinander. Die Vorrichtung besteht aus einer die letzte Packung (1b) von unten erfassende Plattform, die eine schräge Aufwärtsbewegung ausführt, und einer Ausrichtwand (5) hinter der Plattform (4), die während der Aufwärtsbewegung (7a) der Plattform (4) geringfügig von der letzten Packung (1b) zurückgezogen wird. Eine weitere Fördereinrichtung (3) übernimmt in einer abgehenden Bahnebene die hochgehobenen Packungen (1c).

## Beschreibung

Die Erfindung betrifft eine Vorrichtung zum Vereinzeln von auf einem Bandförderer oder dergleichen in einer kontinuierlichen Packungsbahn ohne Zwischenräume ankommenden Packungen, insbesondere komprimierbaren, quaderförmigen Weichpackungen, zwecks Weitertransport in definierten Abständen der einzelnen Packungen voneinander.

In Verpackungsmaschinen kommen in quaderförmigen Packungen verpackte Produkte wie Papiertaschentücher, Zigaretten oder dergleichen, häufig in einer kontinuierlichen Packungsbahn ohne Zwischenräume auf einem Bandförderer an. Um nun an diesen mit hoher Geschwindigkeit durchlaufenden Packungen weitere Schritte vornehmen zu können, wie z.B. das Anbringen von Tapes (Klebestreifen) oder Etiketten zum späteren Wiederverschließen einer Packung nach Gebrauch, ist es erforderlich, die Packungen einzeln und in bestimmten Abständen voneinander getrennt vorliegen zu haben, um diese Schritte durchführen zu können. Hierzu war es z.B. bekannt, die in einer kontinuierlichen Bahn ankommenden Packungen aus diesem Strang in einer Umlenkstation seitlich herauszuschieben und dann mittels eines Stollenbandförderers in definierten Abständen an die weiteren Bearbeitungsstationen zu führen. Eine solche Vereinzelungsvorrichtung hat jedoch den Nachteil, daß die ankommenden Packungen im Materialfluß unterbrochen und in der Richtung umgelenkt werden mußten, was bei hohen Geschwindigkeiten mit Schwierigkeiten verbunden ist.

Aus der DE-OS 28 50 456 ist bereits eine Vorrichtung bekannt, in der auf einem Bandförderer in einer kontinuierlichen Bahn ohne Zwischenräume ankommende Getränkekartons oder Getränkedosen jeweils zu zwei Packungen zusammengefaßt und von den anderen Packungen getrennt werden. Dies erfolgt durch an einer umlaufenden Kette befestigte Tragvorrichtungen mit einer Tragplattform und einer aufrechtstehenden Stützwand, um jeweils pro Tragvorrichtung zwei Getränkekartons oder Getränkedosen in einer schrägen Aufwärtsbewegung zu erfassen und von dem ankommenden, kontinuierlichen Strang zu entfernen. Anschließend werden die durch die einzelnen Tragvorrichtungen erfaßten Packungen von einer oberhalb der ankommenden Bahnebene angeordnete Fördereinrichtung erfaßt, wobei durch entsprechende Trennfinger ein definierter Abstand zwischen den einzelnen Packungen sichergestellt wird. Da durch die Tragvorrichtungen an der umlaufenden Kette die Packungen in aufrechter Lage getragen und transportiert werden müssen, muß die Kette verhältnismäßig stabil ausgebildet werden. Damit die Packungen aufrechtstehen und nicht von der Tragvorrichtung herabfallen können, werden die einzelnen Elemente der Tragvorrichtung, nämlich Tragplattform und Stützwand, durch Führungsbahnen geeigneter Form in die notwendige Lage gebracht. Solche Führungsbahnen, sowie auch die umlaufende Kette, unterliegen einem starken Verschleiß. Vor allem ist die Fördergeschwindigkeit durch diese komplizierte Mechanik und die großen bewegten Massen begrenzt.

Schließlich ist aus der DE-OS 41 27 612 eine gattungsfremde Vorrichtung zur Bildung einer Packungsgruppe bekannt, der jedoch die entsprechenden Packungen bereits vereinzelt und in definierten Abständen auf einem Fördergurt mit Mitnehmern zugeführt werden. Darüber hinaus ist eine Anhebvorrichtung vorgesehen, die eine Plattform sowie einen zur ankommenden Packungsbahn weisenden Mitnehmer aufweist. Diese Plattform mit Mitnehmer führt eine schräge Aufwärtsbewegung von der ankommenden Packungsbahn aus fort durch, wobei die letzte Packung durch die Plattform angehoben wird und der daran befestigte Mitnehmer in die Lücke zwischen den ankommenden Packungen eingreift. Die Packung wird dann in eine angehobene Bahn befördert, von wo aus sie zu Packungsgebinden zusammengestellt wird. Diese bekannte Vorrichtung ist jedoch nicht zum Vereinzelen von in einer kontinuierlichen Packungsbahn ohne Zwischenräume ankommende Packungen geeignet.

Der vorliegenden Erfindung liegt die Aufgabe zugrunde, eine einfach aufgebaute, robuste Vorrichtung zum Vereinzeln von in einer kontinuierlichen Packungsbahn ohne Zwischenräume ankommenden Packungen zu schaffen, die mit hoher Geschwindigkeit eine Vereinzelung im kontinuierlichen Materialfluß durchführen kann, ohne daß hierzu eine Umlenkung der Packungen in eine andere Richtung erforderlich ist.

Diese Aufgabe wird gemäß der vorliegenden Erfindung durch eine Vorrichtung nach dem Oberbegriff des Anspruches 1 dadurch gelöst, daß eine unabhängig von der Plattform bewegte Ausrichtwand hinter der Plattform vorgesehen ist, gegen die die Packungsbahn anläuft und die während der Aufwärtsbewegung der Plattform geringfügig von der letzten Packung zurückgezogen wird und dann wieder schnell in Richtung auf die ankommenden Packungen zurückbewegt wird, wenn die letzte, auf der Plattform befindliche, Packung über die Oberkante der Ausrichtwand hinweggehoben ist.

Bei dieser erfindungsgemäßen Vorrichtung erfolgt die Vereinzelung der Packungen in der Weise, daß die Packungen ohne Stoppen des Materialflusses der kontinuierlichen Packungsbahn durch die Plattform aus der ankommenden Bahnebene in die abgehende Bahnebene angehoben und hierbei durch die sich durch Zurückziehen mitbewegende Ausrichtwand sozusagen von der kontinuierlichen Packungsbahn "abgeholt" und in den Angriffsbereich der weiteren Fördereinrichtung in der abgehenden Bahnebene gebracht wird. Die Ausrichtwand weist hierbei vorzügsweise zwei beiderseits an den Endbereichen der Packungen angreifende Abschnitte auf, und die Plattform ist in Querrichtung der Packungen schmäler als diese. Die Plattform erfaßt dann zwischen den beiden Abschnitten der Ausrichtwand die letzte Packung von unten.

Die weitere Fördereinrichtung ist vorzugsweise ein Stollenbandförderer, der mit einer solchen Fördergeschwindigkeit umläuft, daß die hineingehobenen Packungen mit Abstand zwischen den Stollen weiterbefördert werden.

Die durch die Plattform ausgeführte Bewegung wird vorzugsweise durch ein Kurbelgetriebe erzeugt, und zwar schließt sich der schrägen Aufwärtsbewegung eine waagerechte Bewegung in Förderrichtung der weiteren Fördereinrichtung sowie eine abwärts gerichtete Rückkehrbewegung an. Die Plattform ist hierbei zweckmäßigerweise an einem durch Gelenkvierecke geführten Rahmen befestigt, der von dem Kurbelgetriebe angetrieben wird.

Die Rückzugsbewegung der Ausrichtwand stimmt etwa mit der waagerechten Komponente der schrägen Aufwärtsbewegung der Plattform überein und ist mit dieser synchronisiert. In einer vorteilhaften Ausführungsform ist die Ausrichtwand mittels einer Trägerstange und eines Gelenkvierecks zwischen der ankommenden Bahnebene und der abgehenden Bahnebene in etwa waagerechter Richtung geführt. Der Antrieb der Ausrichtwand erfolgt hierbei vorzugsweise kurvengesteuert.

Die Erfindung wird nachfolgend anhand eines Ausführungsbeispiels unter Bezug auf die beigefügten Zeichnungen näher erläutert.

Es zeigen:
- Figur 1: eine Seitenansicht einer Verpackungsmaschine mit der erfindungsgemäßen Vereinzelungsvorrichtung; und
- Figur 2: eine schematische Detaildarstellung der erfindungsgemäßen Vereinzelungsvorrichtung, von der Seite gesehen.

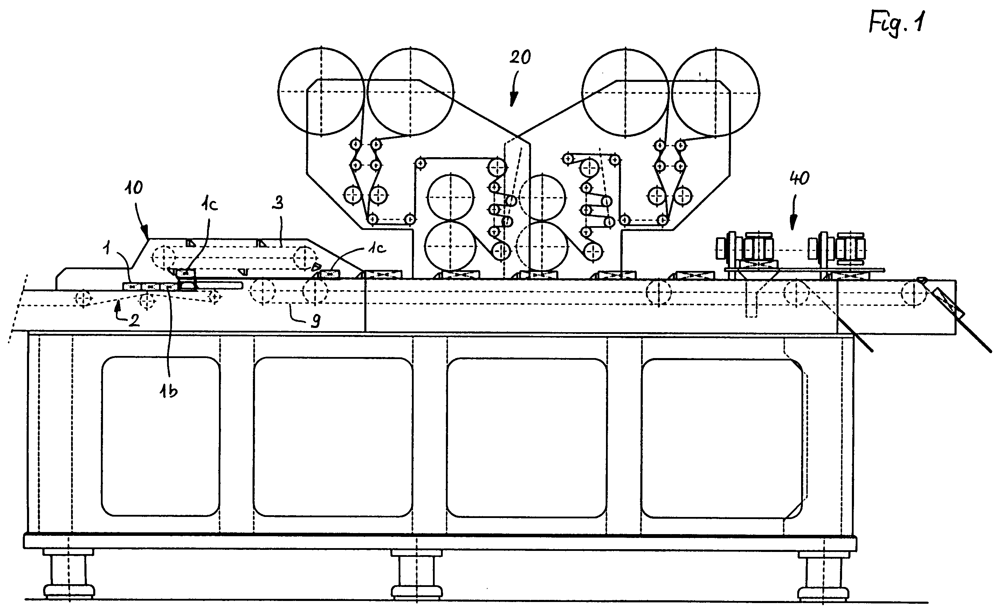

In der in Figur 1 dargestellten Verpackungsmaschine ist im (in der Zeichnung) linken Bereich eine Vereinzelungsvorrichtung 10 gezeigt, die dazu dient, auf einem Bandförderer in einer kontinuierlichen Packungsbahn ohne Zwischenräume ankommende, quaderförmige Packungen 1 zwecks Weitertransport und Weiterverarbeitung zu vereinzeln, wobei die vereinzelten Packungen 1 in definierten Abständen der einzelnen Packungen voneinander weiterlaufen sollen. Diese vereinzelten Packungen werden dann in einem Applikator 20 seitlich mit Tapes (Klebestreifen) oder Etiketten versehen und gelangen anschließend an eine Querabschub-Vorrichtung 40. Dieser Weiterlauf der vereinzelten Packungen 1c ist in Fig. 1 jedoch nur beispielsweise dargestellt; es können hier auch beliebige andere Weiterbehandlungs- oder Verpackungsstationen angeordnet sein.

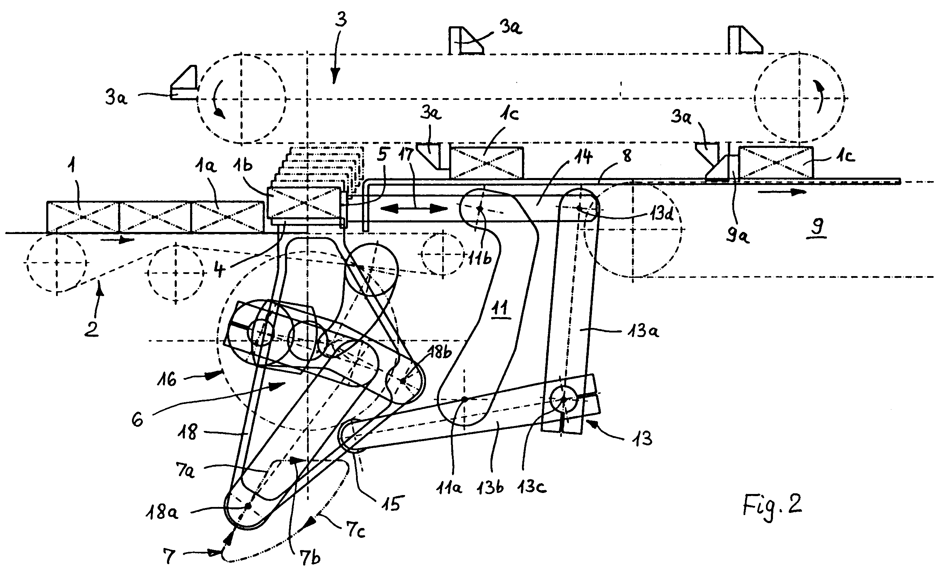

Anhand der Fig. 2 sollen nun Aufbau und Funktion der erfindungsgemäßen Vorrichtung zum Vereinzeln von Packungen beschrieben werden. Wie bereits erwähnt, kommen die einzelnen Packungen 1 in einer kontinuierlichen Packungsbahn auf einem Bandförderer 2 an. In dieser ankommenden Bahnebene ist eine Plattform 4 vorgesehen, die auf einem Rahmen 18 befestigt ist. Dieser Rahmen 18 ist mittels zweier Achsen 18a und 18b durch Gelenkvierecke aufgehängt und führt eine Kurvenbewegung aus, wie sie durch eine strichpunktierte Linie 7 dargestellt ist. Die Plattform 4 befindet sich aufgrund der Bewegung des Rahmens 18 bereits in einer angehobenen Position gegenüber der ankommenden Bahnebene und hat die letzte Packung 1b bereits um einen geringen Betrag angehoben. Rahmen 18 und Plattform 4 befinden sich in einer schrägen Aufwärtsbewegung 7a, und die letzte Packung 1b wird bis in die Höhe einer abgehenden Bahnebene schräg angehoben, wie durch die strichpunktierte Darstellung der Packungen 1b in Fig. 2 angedeutet ist. Die abgehende Bahnebene wird durch die Oberfläche einer Platte 8 dargestellt. Durch die schräge Aufwärtsbewegung 7a der Plattform 4 (zusammen mit dem Rahmen 18) sowie der letzten Packung 1b wird diese nicht nur angehoben, sondern auch von der vorletzten Packung 1a entfernt. Die vorletzte Packung 1a rückt jedoch entsprechend der Transportrichtung der Packungsbahn (siehe Pfeil) nach.

Hinter der Plattform 4 ist zwischen der ankommenden Bahnebene und der abgehenden Bahnebene eine unabhängig von der Plattform 4 angetriebene Ausrichtwand 5 vorgesehen, die am Anfang der Kurvenbewegung 7 (wenn sich die Plattform 4 im Bereich der ankommenden Bahnebene befindet) hinter der Plattform 4 steht. Die Ausrichtwand 5 wird dann im Verlaufe der schrägen Aufwärtsbewegung 7a der Plattform 4 (in der Zeichnung gesehen) nach rechts zurückgezogen in Richtung des Doppelpfeils 17. Hierdurch wird sichergestellt, daß die ankommende Packungsbahn zunächst mit der letzten Packung 1b gegen die Ausrichtwand 5 anläuft, um definierte Ausgangsverhältnisse zum Anheben durch die Plattform 4 zu schaffen. Es sei hier noch bemerkt, daß ein Zurückziehen der Ausrichtwand 5 über den nach unten abgewickelten Teil der Platte 8 hinaus möglich ist, da sich die Ausrichtwand 5 in der Mitte zwischen zwei seitlich angeordneten Platten 8 befindet. Sobald die Plattform 4 die letzte Packung 1b über die Oberkante der Ausrichtwand 5 hinausgehoben, also fast die abgehende Bahnebene auf der Platte 8 erreicht hat, wird die Ausrichtwand 5 durch entsprechenden Antrieb in Richtung des Doppelpfeils 17 schnell wieder in die (linke) Ausgangsposition zurückbewegt.

Nachdem die auf der Plattform 4 liegende letzte Packung 1b mit ihrer Unterseite die abgehende Bahnebene auf der Platte 8 erreicht hat, geht die Kurvenbewegung 7 der Plattform 4 aus dem Bereich 7a in einen waagerechten Bewegungsabschnitt 7b über, wodurch die Packung 1b durch die Plattform auf die Platte 8 aufgeschoben wird. Oberhalb der abgehenden Bahnebene ist eine weitere Fördereinrichtung 3 in der Form eines Stollenbandförderers mit Stollen 3a vorgesehen, die die auf die Platte 8 aufgeschobene Packung 1c erfassen und auf der Platte 8 weiter (in der Zeichnung gesehen) nach rechts forttransportieren. Sobald die Plattform 4 (zusammen mit dem Rahmen 18) das Ende der waagerechten Bewegung 7b erreicht hat, kehrt sie über eine abwärts gerichtete Rückkehrbewegung 7c in die Ausgangsposition zurück, d.h. sie taucht unter die ankommende Bahnebene, um dann im Verlaufe der schrägen Aufwärtsbewegung 7a von unten her die jetzt nachgerückte vorletzte Packung 1a zu erfassen. Auf diese Weise wird eine Packung 1 nach der anderen durch die Plattform 4 und die Ausrichtwand 5 aus der kontinuierlichen Packungsbahn "abgeholt" und in die abgehende Bahnebene auf der Platte 8 befördert. Von hier wird sie durch die weitere Fördereinrichtung 3 auf der Platte 8 nach rechts gefördert, bis sie in den Angriffsbereich einer zusätzlichen Fördereinrichtung 9 gelangt, die ebenfalls als Stollenbandförderer ausgebildet ist und mit ihren Stollen 9a die Packungen 1c einzeln von der Fördereinrichtung 3 übernimmt.

Nachfolgend sollen nun anhand der Fig. 2 die Antriebe für die Plattform 4 und die Ausrichtwand 5 beschrieben werden. Der Aufbau und die Funktion werden jedoch nur grob beschrieben, da solche Antriebe an sich bekannt sind.

Wie bereits erwähnt, ist der Rahmen 18, der die Plattform 4 trägt, über Achsen 18a und 18b in Gelenkvierecken aufgehängt, und zwar in der Weise, daS beide Achsen 18a und 18b sich entlang der Bewegungskurve 7 bewegen. Die schräge Aufwärtsbewegung 7a ist so gestaltet, daß deren waagerechte Bewegungskomponente gleich oder größer als die Fördergeschwindigkeit des Bandförderers 2 (in Pfeilrichtung) ist. Die senkrechte Komponente des Abschnittes 7a reicht mindestens von der ankommenden Bahnebene bis in die abgehende Bahnebene (Platte 8). Der Abschnitt der waagerechten Bewegung 7b muß so groß sein, daß die angehobene Packung 1b sicher auf die Platte 8 aufgeschoben und anschließend von den Stollen 3a der weiteren Fördereinrichtung 3 erfaßt wird. Die abwärts gerichtete Rückkehrbewegung 7c bringt die Plattform 4 wieder von unten in die ankommende Bahnebene unter die nächste Packung 1a. Diese Bewegungskurve 7 wird durch ein an sich bekanntes Kurbelgetriebe 6 erzeugt.

Die Ausrichtwand 5 wird von einer Trägerstange 14 in Richtung des Doppelpfeils 17 bewegt. Die Trägerstange 14 ist in einem Gelenkviereck aufgehängt, das durch einen Lenker 11 und einen Hebelarm 13a dargestellt ist. Der Lenker 11 und der Hebelarm 13a sind in gestellfesten Achsen 11a bzw. 13c gelagert und über Achsen 11b bzw. 13d mit der Trägerstange 14 gekoppelt. Der Hebelarm 13a bildet mit einem weiteren Hebelarm 13b einen Winkelhebel 13, d.h., die Hebel arme 13a und 13b sind fest mit Achse 13c verbunden und bilden eine Einheit, wobei die Achse 13c drehbar am Gestell gelagert ist. Am freien Ende des Hebelarms 13b ist eine Rolle 15 angeordnet, die eine Steuerkurve 16 abtastet. Die Steuerkurve 16 ist in der Zeichnung nach Fig. 2 nur als strichpunktierter Kreis dargestellt, sie hat jedoch eine entsprechend ausgebildete Form, um einen bestimmten Bewegungsablauf der Ausrichtwand 5 zu erzielen.

Die Ausrichtwand 5 führt synchron zu der schrägen Aufwärtsbewegung 7a der Plattform 4 eine Rückzugsbewegung aus, die etwa gleich der waagerechten Komponente des Bewegungsabschnittes 7a ist, und zwar so lange, bis die letzte Packung 1b über die Oberkante der zurückweichenden Ausrichtwand 5 gehoben ist. Danach kann die Ausrichtwand schnell in die Ausgangslage zurückkehren, um für das "Abholen" der vorletzten Packung 1a vorbereitet zu sein. Dementsprechend ist die Form der Steuerkurve 16 ausgebildet.

Auch wenn die erfindungsgemäße Vorrichtung zum Vereinzeln von Packungen in Verbindung mit einer Verpackungsmaschine beschrieben ist, in der anschließend Tapes oder Etiketten auf die Packungen aufgebracht werden (siehe Fig. 1), so ist die erfindungsgemäße Vorrichtung selbstverständlich auch für andere nachfolgende Behandlungsschritte von Packungen geeignet.

## Patentansprüche

1. Vorrichtung zum Vereinzeln von auf einem Bandförderer (2) oder dergleichen in einer kontinuierlichen Packungsbahn ohne Zwischenräume ankommenden Packungen (1), insbesondere komprimierbaren, quaderförmigen Weichpackungen, zwecks Weitertransport in definierten Abständen der einzelnen Packungen voneinander;
mit einer die letzte Packung (1b) der Packungsbahn von unten erfassenden Plattform (4), die eine schräge Aufwärtsbewegung (7a) von der vorletzten Packung (1a) fort aus dieser ankommenden Bahnebene heraus ausführt, wobei die waagerechte Komponente der schrägen Aufwärtsbewegung (7a) der Plattform (4) gleich oder größer als die Geschwindigkeit des Bandförderers (2) der Packungsbahn ist; und
mit einer weiteren, oberhalb der ankommenden Bahnebene in einer abgehenden Bahnebene angeordneten und definierten Abstände zwischen den Packungen (1) sicherstellenden Fördereinrichtung (3), in deren Angriffsbereich die letzte Packung (1b) von der Plattform (4) hineingehoben wird;
gekennzeichnet durch
eine unabhängig von der Plattform (4) bewegte Ausrichtwand (5) hinter der Plattform (4), gegen die die Packungsbahn anläuft und die während der Aufwärtsbewegung (7a) der Plattform (4) geringfügig von der letzten Packung (1b) zurückgezogen wird und dann wieder schnell in Richtung auf die ankommenden Packungen zurückbewegt wird, wenn die letzte, auf der Plattform (4) befindliche, Packung (1b) über die Oberkante der Ausrichtwand (5) hinweggehoben ist.

2. Vorrichtung nach Anspruch 1,
dadurch gekennzeichnet, daß die Ausrichtwand (5) zwei beiderseits an den Endbereichen der Packungen (1) angreifende Abschnitte aufweist und daß die Plattform (4) in Querrichtung der Packungen (1) schmäler als diese ist und zwischen den beiden Abschnitten der Ausrichtwand (5) die letzte Packung (1b) von unten erfaßt.

3. Vorrichtung nach ein Anspruch 1 oder 2,
dadurch gekennzeichnet, daß die weitere Fördereinrichtung (3) ein Stollenbandförderer ist.

4. Vorrichtung nach einem der Ansprüche 1 bis 3,
dadurch gekennzeichnet, daß die Bewegung der Plattform (4) durch ein Kurbelgetriebe (6) erzeugt wird, und daß sich der schrägen Aufwärtsbewegung (7a) eine waagerechte Bewegung (7b) in Förderrichtung der weiteren Fördereinrichtung (3) sowie eine abwärts gerichtete Rückkehrbewegung (7c) anschließt.

5. Vorrichtung nach Anspruch 4,
dadurch gekennzeichnet, daß die Plattform (4) an einem durch Gelenkvierecke geführten Rahmen (18) befestigt ist, der von dem Kurbelgetriebe (6) angetrieben wird.

6. Vorrichtung nach einem der vorstehenden Ansprüche,
dadurch gekennzeichnet, daß die Rückzugsbewegung der Ausrichtwand (5) etwa mit der waagerechten Komponente der schrägen Aufwärtsbewegung (7a) der Plattform (4) übereinstimmt.

7. Vorrichtung nach einem der vorstehenden Ansprüche,
dadurch gekennzeichnet, daß die Ausrichtwand (5) mittels einer Trägerstange (14) und eines Gelenkvierecks (11a, 11b, 13c, 13d) zwischen der ankommenden Bahnebene und der abgehenden Bahnebene in etwa waagerechter Richtung geführt ist.

8. Vorrichtung nach einem der vorstehenden Ansprüche,
dadurch gekennzeichnet, daß die Ausrichtwand (5) eine kurvengesteuerte Bewegung ausführt.
